# EUROPÄISCHE PATENTANMELDUNG

(11) **EP 3 269 625 A1**
(43) Veröffentlichungstag der Anmeldung: **17.01.2018**
(21) Anmeldenummer: 17178285.7
(22) Anmeldetag: 28.06.2017
(51) Int. Cl.: B62M 3/08, A43B 5/14, A43B 1/00

(54) **FAHRRAD PEDAL MIT SCHUHPLATTE**

(30) Priorität: 15.07.2016 EP 16179782
(71) Anmelder: Aceon AG, 6370 Stans (CH)
(72) Erfinder: Huber, Thomas, 6370 Stans (CH); Ottiger, Simon, 6052 Hergiswil (CH)
(74) Vertreter: Koelliker, Robert

(57) **Zusammenfassung**

Die vorliegende Erfindung bezieht sich auf ein Fahrrad Pedal (1) mit Schuhplatte (2), wobei das Pedal (1) und die Schuhplatte (2) als Kugelgelenk ausgebildet sind, wobei im Wesentlichen das Pedal (1) einen Gelenkkopf (3) mit Achse (4) und die Schuhplatte (2) eine Gelenkpfanne (5) umfasst, wobei der Gelenkkopfs (3) und/oder die Gelenkpfanne (5) im Wesentlichen einstückiges magnetischem oder magnetisiertem Material umfassen. Beansprucht werden auch Verfahren zur Herstellung des Fahrrad Pedals (1) und der Schuhplatte (2) sowie die Verwendung des Pedals (1) und der Schuhplatte (2) für mit mindestens einer Kurbel angetriebene Geräte.

## Beschreibung

Die vorliegende Erfindung betrifft ein Fahrrad Pedal mit Schuhplatte, ein Verfahren zur Herstellung des Fahrrad Pedals und der Schuhplatte, sowie die Verwendung des Fahrrad Pedals und der Schuhplatte.

Die Erfindung von Fahrrad Pedalen war für die Entwicklung von Fahrrädern, wie wir sie heute kennen, äusserst wichtig. Denn über Fahrrad Pedalen wird die menschliche Muskelkraft - in der Regel die Muskelkraft der Beine - auf das Fahrrad übertragen, wodurch dieses angetrieben wird. Ohne Fahrrad Pedalen gäbe es keine Fahrräder in der heutigen Form.

Die ursprüngliche Form von Fahrrad Pedalen, das Blockpedal, wurde in der Zwischenzeit zu verschiedenen unterschiedlichen Fahrrad Pedalen weiter entwickelt. Dabei hat sich das sogenannte Klickpedal in vielerlei Hinsicht etabliert - insbesondere im Sportbereich. Mit geeigneten Fahrrad Schuhen, welche an den Sohlen eine spezielle Schuhplatte, auch Cleat genannt, aufweisen, können die Schuhe über die Schuhplatte mittels Druck in das Klickpedal eingerastet werden. Somit wird eine feste Verbindung der Fahrrad Schuhe mit den Fahrrad Pedalen erhalten. Wird der Schuh zur Seite gedreht, löst sich diese Verbindung wieder. Nachteilig an solchen Klickpedalen ist jedoch, dass der Fuss und das Bein, die mit dem Klickpedal verbunden sind, wenig Bewegungsfreiheit besitzen, was zu Knieschmerzen und manchmal sogar zu Verletzungen führen kann. Zudem ist das Ein- und Auskuppeln nicht ganz einfach und kann - oft mangels Übung - zu Stürzen führen. Auch ist es möglich, dass die Cleats an der Schuhsohle und/oder dem Klickpedal selber aufgrund derer komplexen Formen und Geometrien mit Dreck verstopft werden - beispielsweise nach dem Absteigen vom Fahrrad während einer Pause.

Eine weitere Entwicklung von Fahrrad Pedalen schlägt ein Magnetpedal vor. So beschreibt die WO-A-2006/042622 ein im Wesentlichen herkömmliches Fahrrad Pedal, wobei in die offenen Bereiche des Pedals Permanentmagnetelemente eingeführt werden. Als Schuhplatte, d.h. als Cleat, wird eine flache, weichmagnetische Platte verwendet. Dadurch ziehen sich der Cleat - und somit der Schuh - und das Pedal an und bilden eine kraftschlüssige Verbindung. Der Schuh ist nicht fest an einem Punkt des Pedals fixiert und kann zudem bewegt werden. Nachteilig daran ist jedoch die mangelnde Bewegungsfreiheit des Schuhs, da er sich seitlich nicht drehen lässt.

Die EP-A-1972221 beschreibt ein Fahrrad Pedal in Kugelform, wobei in die Schuhsohle eine Ausbuchtung eingelassen ist, in welche die Pedal-Kugel passt. Die Kugel des Pedals umfasst mindestens zwei magnetische Ringe mit unterschiedlich orientierten Magnetpolen und in der Ausbuchtung der Schuhsohle sind magnetische Blöcke in der Art und Weise eingelassen, dass sie die magnetischen Ringe des Kugelpedals in Standardposition anziehen, wodurch der Schuh am Kugelpedal befestigt wird. Wird nun der Schuh zur Seite gedreht, stossen sich die entsprechenden magnetischen Ringe und magnetischen Blöcke ab, wodurch sich der Schuh einfach lösen lässt. Nachteilige daran ist, dass sich der Schuh schon bei einer einzig falschen Bewegung vom Fahrrad Pedal ablöst. Zudem ist der Aufbau des Fahrrad Pedals und der Ausbuchtung der Schuhsohle komplex und entsprechend sind sie aufwendig herzustellen und die erzielbaren magnetischen Anziehungskräfte sind limitiert und in der Regel auch zu gering um eine ansprechende Fixierung des Schuhs am Pedal zu erhalten. Einen Einsatz eines Kugelmagneten wird weder eingesetzt noch nahegelegt.

Die Aufgabe der vorliegenden Erfindung ist daher die Bereitstellung eines Fahrrad Pedals und gegebenenfalls einer dazu passenden Schuhplatte, wobei das Fahrrad Pedal dem Fahrradfahrer - im Vergleich zu bestehenden Fahrrad Pedalen - grössere Bewegungsfreiheit bieten und Knieschmerzen reduzieren oder sogar verhindern soll. Der Fahrradschuh mit der Schuhplatte soll sich einfach und möglichst in jeder Schuhstellung mit dem Fahrrad Pedal verbinden lassen. Zudem soll es möglich sein, den Fahrradschuh, und somit die Schuhplatte, auf einfache Art und Weise mittels Wegziehen des Schuhs und/oder durch eine geeignete Drehbewegung vom Fahrrad Pedal zu lösen.

Diese komplexe Aufgabe konnte überraschenderweise gelöst werden mit einem Fahrrad Pedal (1) mit Schuhplatte (2), wobei das Pedal (1) und die Schuhplatte (2) als Kugelgelenk ausgebildet sind, wobei im Wesentlichen das Pedal (1) einen Gelenkkopf (3) mit Achse (4) und die Schuhplatte (2) eine Gelenkpfanne (5) umfasst, dadurch gekennzeichnet, dass
a) mindestens 25 Flächen-% der Oberfläche des Gelenkkopfs (3) oder mindestens 50 Flächen-% der Gelenkpfanne (5) aus im Wesentlichen einstückigem magnetischem oder magnetisiertem Material und der andere Teil des Kugelgelenks aus magnetisierbarem Material besteht, oder
b) mindestens 25 Flächen-% der Oberfläche des Gelenkkopfs (3) oder mindestens 50 Flächen-% der Gelenkpfanne (5) aus im Wesentlichen einstückigem magnetischem oder magnetisiertem Material und der andere Teil des Kugelgelenks aus magnetisierbarem Material besteht, wobei mindestens ein Teil mindestens einer der Oberflächen mit einem nicht-magnetischen und/oder nicht-magnetisierbaren Material bedeckt ist, oder
c) mindestens 25 Flächen-% der Oberfläche des Gelenkkopfs (3) und mindestens 50 Flächen-% der Gelenkpfanne (5) aus im Wesentlichen einstückigem magnetischem oder magnetisiertem Material besteht, und/oder
d) mindestens 25 Flächen-% der Oberfläche des Gelenkkopfs (3) und mindestens 50 Flächen-% der Gelenkpfanne (5) aus im Wesentlichen einstückigem magnetischem oder magnetisiertem Material besteht, wobei mindestens eine der Oberflächen mit einem nicht-magnetischen und/oder nicht-magnetisierbaren Material bedeckt ist.

Beansprucht wird auch ein Verfahren zur Herstellung des erfindungsgemässen Fahrrad Pedals (1), wobei der Gelenkkopf (3) so mit der Achse (4) verbunden wird, dass die Verlängerung der Rotationsachse (6) der Achse (4) im Wesentlichen durch den Mittelpunkt des Gelenkkopfs (3) führt, wobei
i) der Gelenkkopf (3) mit der Achse (4) mit einem Fixiermittel (11) verbunden wird, wobei das Fixiermittel (11) eine Schraube, Schweissnaht, Lötnaht, Klebeschicht, Klemme, Niete, Steckverbindung und/oder einen Bolzen sein kann, oder
ii) der Kugelmagnet (7) mit der Pedalpfanne (8) und der Abdeckkappe (9) umschlossen wird, die Pedalpfanne (8) und die Abdeckkappe (9) miteinander verbunden werden und der Kugelmagnet (7), die Pedalpfanne (8) und die Abdeckkappe (9) somit den Gelenkkopf (3) bilden, wobei vorher, während und/oder nachher die Gehäusehülse (10), welche mit mindestens einem Teil des Gelenkkopfs (3) verbunden ist, über die Achse (4) geschoben wird, das Stabilisierungselement (10a) der Gehäusehülse (10) an der Achse (4) mit einer Axialbefestigung (12) stabilisiert und die Axialbefestigung (12) an der Achse (4) mittels Fixiermittel (11) fixiert wird, wobei zwischen der Gehäusehülse (10) und der Achse (4) und/oder Axialbefestigung (12) mindestens eine Dichtung (13) und/oder mindestens ein Lager (14) angeordnet wird.

Zudem wird auch ein Verfahren beansprucht zur Herstellung der erfindungsgemässen Schuhplatte (2), wobei die Gelenkpfanne (5) der Schuhplatte (2) so ausgebildet wird, dass
- der Gelenkkopf (3) des Pedals (1) und die Gelenkpfanne (5) des Kugelgelenks sich im Wesentlichen formpassend, formschlüssig und/oder kraftschlüssig verbinden, oder
- der Wölbungsradius der Gelenkpfanne (5) grösser ist als der Radius des Gelenkkopfs (3), wobei der Gelenkkopf (3) und/oder die Gelenkpfanne (5) aus magnetischem oder magnetisiertem Material und der andere Teil des Kugelgelenks aus magnetisierbarem Material besteht, oder
- die Gelenkpfanne (5) als im Wesentlichen eine flache Platte bildet, wobei der Gelenkkopf (3) und/oder die Gelenkpfanne (5) magnetischem oder magnetisiertem Material und der andere Teil des Kugelgelenks magnetisierbares Material umfasst.

Beansprucht wird zudem auch die Verwendung des erfindungsgemässen Pedals (1) und der erfindungsgemässen Schuhplatte (2) sowie des erfindungsgemäss hergestellten Pedals (1) und der erfindungsgemäss hergestellten Schuhplatte (2) als Pedal und Schuhplatte für mit mindestens einer Kurbel angetriebenen Geräte wie Zweiräder, Fahrräder, Rennfahrräder, Mountainbikes, City-Bikes, Tourenfahrräder, Rischkas, Lastenfahrräder, motorisierte Fahrräder, Elektro-Bikes, Spinning Geräte, Ergometer und/oder Heimtrainer-Fahrräder.

Das erfindungsgemässe Fahrrad Pedal (1) und die erfindungsgemässe Schuhplatte (2), das erfindungsgemäss hergestellte Fahrrad Pedal (1) und die erfindungsgemäss hergestellte Schuhplatte (2) sowie die erfindungsgemässe Verwendung des Fahrrad Pedals (1) und der Schuhplatte (2) weisen viele Vorteile auf.

So weist das erfindungsgemässe Fahrrad Pedal (1) und die erfindungsgemässe Schuhplatte (2) eine wesentlich grössere Bewegungsfreiheit für den Fuss auf als herkömmliche Fahrrad Pedalen mit entsprechenden Schuhplatten. Dadurch werden überraschenderweise Knieschmerzen deutlich reduziert oder treten gar nicht mehr auf. Zudem lässt sich der Fahrradschuh mit der Schuhplatte (2) auf schnelle und einfache Art in jeder Schuhstellung und unabhängig der Position des Pedals (1) mit dem Fahrrad Pedal (1) verbinden. Dies ist insbesondere dann der Fall, wenn der Gelenkkopf (3) und die Gelenkpfanne (5) magnetisches, magnetisiertes und gegebenenfalls magnetisierbares Material enthält, wodurch sich der Gelenkkopf (3) und die Gelenkpfanne (5) magnetisch anziehen. Zudem verschmutzt - und somit verstopft - der Gelenkkopf (3) resp. die Gelenkpfanne (5) aufgrund der einfachen Geometrie weniger und eine Reinigung wird auch wesentlich einfacher. Auch ist es möglich, den Fahrradschuh mit der Schuhplatte auf einfache Art und Weise mittels Wegziehen des Schuhs und/oder durch eine geeignete Drehbewegung vom Fahrrad Pedal zu lösen ohne dass Gefahr besteht, dass sich bei unsachgemässer Fussbewegung der Schuh automatisch vom Pedal löst. Somit wird insgesamt mit dem erfindungsgemässen Fahrrad Pedal (1) und der erfindungsgemässen Schuhplatte (2) die Sicherheit der Fahrradfahrer - insbesondere beim Anfahren und Halten - wesentlich erhöht und die Unfallgefahr reduziert. Zudem kann das erfindungsgemässe Fahrrad Pedal (1) und die erfindungsgemässe Schuhplatte (2) überraschenderweise auf einfache Art und Weise schnell und effizient hergestellt werden.

### Das Kugelgelenk

Das erfindungsgemässe Fahrrad Pedal (1) mit der erfindungsgemässen Schuhplatte (2), sowie das nach dem erfindungsgemässen Verfahren hergestellte Pedal (1) und die nach dem erfindungsgemässen Verfahren hergestellte Schuhplatte (2) bilden zusammen ein Kugelgelenk. Unter dem Begriff Kugelgelenk wird erfindungsgemäss ein Gelenk verstanden, bei welchem ein Gelenkkopf eine kugelähnliche Form aufweist und in das Gegenstück, eine Gelenkpfanne, passt, wobei sich die Gelenkpfanne im Wesentlichen in alle Richtungen mit keiner oder nur geringer Reibung bewegen kann.

Erfindungsgemäss umfasst das Fahrrad Pedal (1) einen Gelenkkopf (3) mit Achse (4) und die Schuhplatte (2) eine Gelenkpfanne (5). Durch diese Anordnung lässt sich der Gelenkkopf (3) in der Gelenkpfanne (5) im Wesentlichen in alle Richtungen rotatorisch bewegen. Die Gelenkpfanne (5), auch Kugelpfanne (5) genannt, ist dabei so ausgebildet, dass der Gelenkkopf (3) problemlos, gegebenenfalls unter Anwendung von geringen Kräften, vielmals, reversibel und zerstörungsfrei in die Gelenkpfanne (5) platziert und wieder - beispielsweise mittels Ziehen zerstörungsfrei entfernt werden kann.

In einer bevorzugten Ausführungsform umfasst der Gelenkkopf (3) oder die Gelenkpfanne (5) magnetisches oder magnetisiertes Material, wobei der andere Teil des Kugelgelenks aus magnetisierbarem Material besteht.

In einer weiteren bevorzugten Ausführungsform umfassen der Gelenkkopf (3) und die Gelenkpfanne (5) magnetisches oder magnetisiertes Material.

Bei beiden genannten Ausführungsformen besteht mindestens 25 Flächen-%, bevorzugt mindestens 50 Flächen-%, insbesondere mindestens 75 Flächen-% und ganz bevorzugt im Wesentlichen 100 Flächen-%, der Oberfläche des Gelenkkopfs (3), respektive mindestens 50 Flächen-%, bevorzugt mindestens 75 Flächen-%, insbesondere im Wesentlichen 100 Flächen-%, der Gelenkpfanne (5) aus magnetischem oder magnetisiertem Material.

Das magnetische oder magnetisierte Material ist im Wesentlichen einstückig, wobei erfindungsgemäss unter einstückig verstanden wird, dass das magnetische oder magnetisierte Material aus einem zusammenhängenden Material oder aus einem aus mehreren Teilen geformten zusammenhängenden Material besteht.

Zudem kann bei den genannten Ausführungsformen gegebenenfalls mindestens ein Teil von mindestens einer der Oberflächen mit einem nicht-magnetischen oder nicht-magnetisierbaren Material bedeckt sein. Es ist auch möglich, dass das ganze Fahrrad Pedal (1) und/oder die ganze Schuhplatte (2) mit einem nicht-magnetischen und/oder nicht-magnetisierbaren Material bedeckt sein kann.

Geeignete magnetische, magnetisierte, magnetisierbare, nicht-magnetische und nicht-magnetisierbare Materialien sind dem Fachmann bekannt.

Erfindungsgemässe magnetische und magnetisierte Materialien sind bevorzugt Hartmagnetische Materialien, Dauermagnete, Permamagnete und/oder Elektromagnete und besitzen selber und somit unabhängig von deren Umfeld, magnetische Eigenschaften, wobei Elektromagnete sich insbesondere für Geräte mit Elektroantrieb eignen. Nicht-limitierende Beispiele von geeigneten Dauermagneten umfassen Legierungen auf Basis von Neodym-Eisen-Bor (NdFeB), Kobalt-Samarium, Aluminium-Nickel-Cobalt, Hartferrite auf Basis von Barium und/oder Strontium, Platin-Cobalt, Kupfer-Nickel-Eisen, Kupfer-Nickel-Cobalt, Eisen-Cobalt-Chrom und/oder Mangan-Aluminium-Kohlenstoff, wobei Legierungen auf Basis von Neodym-Eisen-Bor (NdFeB) ganz besonders bevorzugt sind.

Magnetisierbare Materialien, auch weichmagnetische Materialien genannt, sind selber keine Magnete, sondern können schon durch ein leichtes äusseres Magnetfeld leicht magnetisiert werden. Nicht-limitierende Beispiele von geeigneten magnetisierbaren Materialien umfassen Eisen, Stahl, Legierungen auf Basis von Eisen-Nickel-Cobalt, Nickel-Zink sowie Mangan-Zink.

Nicht-magnetische und nicht-magnetisierbare Materialien sind nicht magnetisch und ändern auch nicht ihre Eigenschaften wenn sie in die Nähe eines Magnetfeldes kommen. Nicht-limitierende Beispiele von geeigneten nicht-magnetischen und nicht-magnetisierbaren Materialien umfassen Kunststoffe, insbesondere Hartkunststoffe, organische Polymer Beschichtungen, Metallbeschichtungen, Verbundstoffe wie beispielsweise Glasfaser-Kunststoffe und/oder Karbonfaser-Kunststoffe.

Geeignete mechanische Anordnungen zum Ein- und Ausklicken des Gelenkkopfs (3) und der Gelenkpfanne (5) des Kugelgelenks sind dem Fachmann bekannt. Bevorzugte, nicht-limitierende Beispiele einer geeigneten mechanischen Anordnung sind Schnappverbindungen wie beispielsweise eine Schnappkugelgelenk-Verbindung und/oder eine Passfeder-Verbindung.

Bei einer Schnappkugelgelenk-Verbindung kann beispielsweise der Rand der Gelenkpfanne (5) der Schuhplatte (2) und/oder der Pfannenplatte (15) eine leichte Erhöhung aufweisen, wobei die Erhöhung bevorzugt flexibles Material, beispielsweise dünner Stahl wie Federstahl, Aluminium und/oder Kunststoff wie Hartkunststoff umfasst. Der Gelenkkopf (3) kann dann - in entsprechender Geometrie zur leichten Erhöhung der Gelenkpfanne (5) - eine, typischerweise ringartige, Vertiefung aufweisen, in welche die entsprechende leichte Erhöhung der Pfannenplatte (15) einrastet. Dabei wird eine solche mechanische Verbindung anhand der Geometrie und Materialien bevorzugt so konstruiert, dass die eingerastete Schuhplatte (2) lediglich durch leichten Zug und/oder eine seitliche Bewegung wieder vom Gelenkkopf (3) entfernt werden kann. Andere geeignete mechanische Anordnungen sind dem Fachmann bekannt.

In einer bevorzugten Ausführungsform des Kugelgelenks mit dem erfindungsgemässen Pedal (1) und der erfindungsgemässen Schuhplatte (2) verbinden sich der Gelenkkopf (3) und die Gelenkpfanne (5) im Wesentlichen formpassend, formschlüssig und/oder kraftschlüssig miteinander, wobei der Gelenkkopf (3) in der Regel vielmals, reversibel und zerstörungsfrei in die Gelenkpfanne (5) platziert und wieder entfernt werden kann. Dabei kann der Gelenkkopf (3) und/oder die Gelenkpfanne (5) magnetisches oder magnetisiertes Material und der andere Teil des Kugelgelenks magnetisierbares Material umfassen. Es ist aber auch möglich, dass zwischen dem Gelenkkopf (3) und der Gelenkpfanne (5) keine magnetischen Kräfte bestehen und somit kein magnetisches, magnetisiertes und/oder magnetisierbares Material vorhanden ist.

In einer anderen bevorzugten Ausführungsform des Kugelgelenks ist der Wölbungsradius der Gelenkpfanne (5) grösser, bevorzugt mindestens 5% grösser, insbesondere mindestens 20% grösser, als der Radius des Gelenkkopfs (3), wobei der Gelenkkopf (3) und/oder die Gelenkpfanne (5) magnetisches oder magnetisiertes Material und der andere Teil des Kugelgelenks magnetisierbares Material umfassen, wodurch sich der Gelenkkopf (3) und die Gelenkpfanne (5) aufgrund der magnetischen Kräfte anziehen.

In einer weiteren bevorzugten Ausführungsform des Kugelgelenks ist die Gelenkpfanne (5) als im Wesentlichen flache Platte ausgebildet, wobei der Gelenkkopf (3) und/oder die Gelenkpfanne (5) magnetisches oder magnetisiertes Material und der andere Teil des Kugelgelenks magnetisierbares Material umfassen. Durch die im Wesentlichen als flache Platte ausgebildete Gelenkpfanne (5) sind der Gelenkkopf (3) und die Gelenkpfanne (5) nicht starr miteinander verbunden, wodurch der Schuh mit der Gelenkpfanne - und somit der Fuss - eine noch grössere Bewegungsfreiheit besitzen. Aufgrund der magnetischen Anziehungskräfte zwischen dem Gelenkkopf (3) und der Gelenkpfanne (5) sind diese jedoch trotzdem genügend fest miteinander verbunden um das Fahrrad mittels Beinkraft fortzubewegen.

### Das Fahrrad Pedal (1)

Das erfindungsgemässe Fahrrad Pedal (1) und das erfindungsgemäss hergestellte Fahrrad Pedal (1) umfassen einen Gelenkkopf (3) und eine Achse (4). Am einen Ende der Achse (4) ist der Gelenkkopf (3) befestigt und am anderen Ende weist die Achse (4) vorteilhafterweise eine Befestigungsvorrichtung auf um die Achse an der Kurbel des Fahrrads zu befestigen. Geeignete Befestigungsvorrichtungen sind dem Fachmann bekannt und umfassen insbesondere geeignete Gewinde. Dadurch kann das Pedal (1) beispielsweise mittels einem Imbuss- und/oder Schraubenschlüssel an der Kurbel, d.h. Fahrradkurbel, befestigt werden.

Der Gelenkkopf (3) des erfindungsgemässen Pedals (1) und des nach dem erfindungsgemässen Verfahren hergestellten Pedals (1) umfasst in einer bevorzugten Ausführungsform einen Kugelmagneten (7), d.h. eine Magnetkugel (7), wobei der Kugelmagnet (7) bevorzugt ein Vollmagnet ist.

Geeignete Kugelmagnete (7) sind dem Fachmann bekannt und im Handel erhältlich. Sie können auch beschichtet sein, insbesondere mit einer Metall Beschichtung versehen sein.

Die Haftkraft, d.h. Magnetstärke, des magnetischen oder magnetisierten Materials, insbesondere des Kugelmagneten (7), beträgt bevorzugt von 2 bis 50 kg, insbesondere von 3 bis 30 kg. Dabei wird unter Haftkraft die Kraft verstanden, welche notwendig ist, um das magnetische oder magnetisierte Material wie beispielsweise der Kugelmagnet (7) senkrecht von einer 1 cm dicken, glatt polierten und flachen Baustahlplatte der Stahlsorte S235JR (gemäss EN 10025-2:2004-10) zu entfernen.

In einer Ausführungsform bildet der Kugelmagnet (7) selber der Gelenkkopf (3).

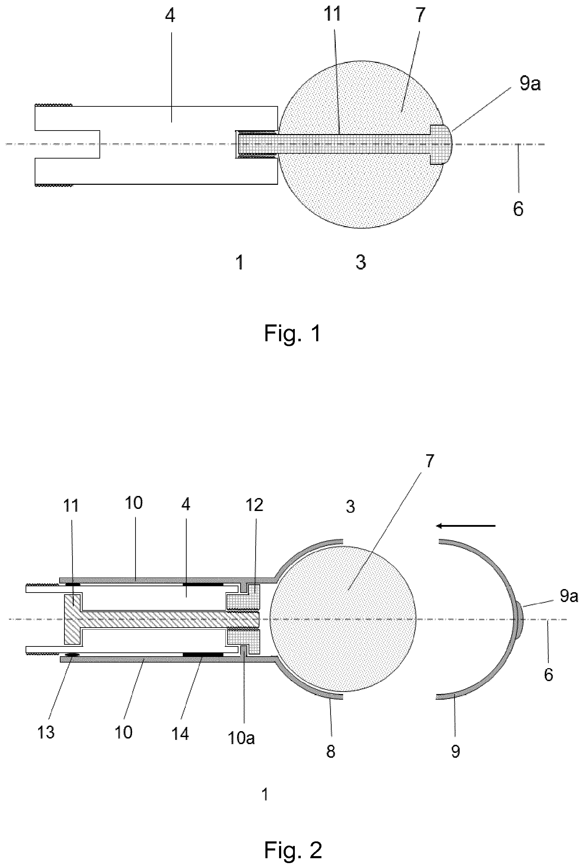

In einer anderen, bevorzugten Ausführungsform umfasst der Gelenkkopf (3) eine Pedalpfanne (8) und eine Abdeckkappe (9). Der Gelenkkopf (3) umfasst bevorzugt einen Kugelmagnet (7), welcher von der Pedalpfanne (8) und der Abdeckkappe (9) umgeben ist. Oft ist es hilfreich, wenn die Ebene zwischen der Pedalpfanne (8) und der Abdeckkappe (9) durch den Mittelpunkt des Kugelmagneten (7) führt. Dabei kann diese Ebene in einem beliebigen Winkel zur Rotationsachse (6) der Achse (4) angeordnet sein. So kann sie beispielsweise senkrecht zur Rotationsachse (6) der Achse (4) liegen, wie in Fig. 2 gezeigt. Sie kann aber auch in einem anderen Winkel oder sogar durch die die Rotationsachse (6) selber führen. Dabei wird unter Rotationsachse (6) die Drehachse verstanden, um welche sich die Achse (4) dreht. Die Rotationsachse (6) der Achse (4) ist typischerweise senkrecht zur Kurbelebene wie auch senkrecht zur Ebene in welcher das Fahrrad in aufrechter und gerader Fahrrichtung liegt.

In einer weiteren bevorzugten Ausführungsform weist der Gelenkkopf (3) und/oder die Abdeckkappe (9) im Bereich der Verlängerung der Rotationsachse (6) der Achse (4) eine Ausstülpung (9a) auf, d.h. an der Seite des Gelenkkopfs (3), welche von der Achse am weitesten entfernt liegt. Die Ausstülpung (9a) kann beispielsweise eine Verdickung in der Abdeckkappe (9) umfassen. Durch eine solche Ausstülpung (9a) kann durch entsprechende Drehung der Schuhplatte (2) - und somit des daran angebrachten Schuhs mit dem Fuss - die Schuhplatte (2) auf einfache Art und Weise vom Gelenkkopf (3) - und somit vom erfindungsgemässen Pedal (1) - gelöst werden. Diese Ausführungsform ist insbesondere vorteilhaft, wenn der Gelenkkopfs (3) und/oder die Gelenkpfanne (5) magnetisches oder magnetisiertes Material umfassen.

In einer Ausführungsform ist der Gelenkkopf (3) direkt mit einem Fixiermittel (11) mit der Achse (4) verbunden, wie beispielhaft in Fig. 1 dargestellt. Dabei kann das Fixiermittel (11) eine Schraube, Schweissnaht, Lötnaht, Klebeschicht, Klemme, Niete, Steckverbindung, Mutter, Zapfen, Stift und/oder einen Bolzen sein.

In einer anderen, bevorzugten Ausführungsform ist der Gelenkkopf (3) an einer Gehäusehülse (10) befestigt, wobei die Gehäusehülse (10) ein Stabilisierungselement (10a) umfasst und die Gehäusehülse (10) über die Achse (4) greift. Das Stabilisierungselement (10a) der Gehäusehülse (10) ist an der Achse (4) mit einer Axialbefestigung (12) stabilisiert, wobei die Axialbefestigung (12) an der Achse (4) fixiert ist. Das Stabilisierungselement (10a) ist bevorzugt im inneren Bereich der Gehäusehülse (10) angeordnet und kann beispielsweise eine Art Ring innerhalb der Gehäusehülse (10) bilden. Somit ist das Stabilisierungselement (10a) Teil der Gehäusehülse (10). Diese Anordnung erlaubt die Rotation der Gehäusehülse (10) um die Achse (4), verhindert jedoch deren Translation und somit das Entfernen des Gelenkkopfs (3) mit der Gehäusehülse (10) von der Achse (4). Die Achse (4) kann zudem gegebenenfalls ein Fixiermittel (11) wie beispielsweise eine Schraube, eine Niete und/oder einen Bolzen umfassen, wobei zwischen der Gehäusehülse (10) und der Achse (4) und/oder Axialbefestigung (12) bevorzugt mindestens eine Dichtung (13) und/oder mindestens ein Lager (14) angeordnet sind. Die mindestens eine Dichtung (13) und/oder das mindestens eine Lager (14) ermöglichen, dass sich die Achse (4) praktisch ohne Widerstand innerhalb der Gehäusehülse (10) bewegen kann.

Die Gehäusehülse (10) kann ein- oder mehrteilig sein. Ist die Gehäusehülse (10) einteilig, ist bevorzugt die Pedalpfanne (8) des Gelenkkopfs (3) an der Gehäusehülse (10) befestigt. Ist die Gehäusehülse (10) zwei- oder mehrteilig, kann die Pedalpfanne (8) und/oder die Abdeckkappe (9) des Gelenkkopfs (3) an der Gehäusehülse (10) befestigt sein.

Die Fixierung der Axialbefestigung (12) an der Achse (4) kann durch bekannte Art und Weise erfolgen wie beispielsweise durch Schweissen, Löten, Kleben, Schrauben, Klemmen, Nieten und/oder Stecken. Dabei kann beispielsweise die Achse (4) ein Fixiermittel (11), insbesondere eine Schraube, Schweissnaht, Lötnaht, Klebeschicht, Klemme, Niete, Steckverbindung, Mutter, Zapfen, Stift und/oder einen Bolzen, umfassen, wobei das Fixiermittel (11) durch die Achse (4) entlang der Rotationsachse (6) hindurchgeführt werden kann und mit der Axialbefestigung (12) fixiert wird. Alternativ kann die Achse (4) und/oder die Axialbefestigung (12) selber so ausgestaltet sein, dass sie beispielsweise ein Aussengewinde und/oder Innengewinde umfasst und/oder die Funktion eines Fixiermittels (11) wie Niete, Schraube, Mutter, Bolzen, Zapfen und/oder Stift umfasst und mit einer dazu geeigneten Axialbefestigung (12) resp. Achse (4) fixiert werden kann.

Geeignete Achsen (4), Fixiermittel (11) wie Schrauben, Nieten und/oder Bolzen, Axialbefestigungen (12), insbesondere auch Achsen (4) und Axialbefestigungen (12) mit der Funktion eines Fixiermittels wie Niete, Schraube, Mutter, eines Bolzens, Zapfens und/oder Stifts, sowie Dichtungen (13) und Lager (14), sind dem Fachmann bekannt und im Handel erhältlich. Auch ist dem Fachmann deren optimale Geometrie und Platzierung innerhalb der Gehäusehülse (10) bekannt.

### Die Schuhplatte (2)

Die erfindungsgemässe Schuhplatte (2), d.h. Cleat (2), und die erfindungsgemäss hergestellte Schuhplatte (2) umfassen eine Gelenkpfanne (5) in welche der Gelenkkopf (3) des erfindungsgemässen Pedals (1) passt.

Die Schuhplatte (2) ist bevorzugt an einer Schuhsohle, insbesondere an einer Fahrradschuhsohle, mit geeigneter Befestigungsvorrichtung fixierbar.

Geeignete Befestigungsvorrichtungen sind dem Fachmann bekannt und umfassen bevorzugt eine oder mehrere Schraubverbindungen, insbesondere ein oder mehrere Fixiermittel (11).

Die mindestens eine Schraubverbindung kann innerhalb der Gelenkpfanne (5) und/oder ausserhalb der Gelenkpfanne (5) angeordnet sein. Oft ist es vorteilhaft, wenn die Schuhplatte (2) für die Schraubverbindung mindestens eine Öffnung, d.h. ein Loch, aufweist, durch welche eine Fixiermittel geführt werden kann, wobei die mindestens eine Öffnung bevorzugt in der Schuhplatte (2), aber neben der Gelenkpfanne (5), angeordnet ist.

Die erfindungsgemässe Schuhplatte (2) und erfindungsgemäss erhaltene Schuhplatte (2) mit der Gelenkpfanne (5) kann ein- oder mehrteilig sein. In einer bevorzugten Ausführungsform umfasst die Schuhplatte (2) eine Pfannenplatte (15) und eine Adapterplatte (16), wobei die Pfannenplatte (15) und die Adapterplatte (16) miteinander verbunden sind. Dabei umfasst die Pfannenplatte (15) bevorzugt die Gelenkpfanne (5) und die Adapterplatte (16) kann an der Schuhsohle befestigt werden. Dies erlaubt in einem ersten Schritt eine einfache Montage der Adapterplatte (16) an der Schuhsohle und in einem zweiten Schritt die Befestigung der Pfannenplatte (15) an der Adapterplatte (16).

In einer Ausführungsform weist die Schuhplatte (2) und/oder die die Adapterplatte (16) mindestens 1 Loch, bevorzugt mindestens 2 Löcher, auf, um die Adapterplatte (16) an eine dafür geeignete Schuhsohle zu befestigen. Zudem weist die Adapterplatte (16) bevorzugt mindestens eine Vorrichtung auf, um die Pfannenplatte (15) an der Adapterplatte (16) zu befestigen, wobei die Vorrichtung bevorzugt mindestens ein, insbesondere zwei, Vertiefungen mit Gewinden umfasst. Mit dieser Anordnung kann die Adapterplatte (16) an der Schuhsohle und die Pfannenplatte (15) an der Adapterplatte (16) befestigt werden, wobei die Befestigung typischerweise mittels Schraubverbindung bewerkstelligt wird.

In einer bevorzugten Ausführungsform weist die - beispielsweise einteilige - Schuhplatte (2) an der Schuhsohle und/oder die Pfannenplatte (15) der zwei- oder mehrteiligen Schuhplatte (2) mindestens eine, bevorzugt mindestens zwei, für eine Schraubverbindung geeignete, längliche Öffnung (17) auf um die optimale Position der Schuhplatte (2) an der Schuhsohle und/oder die optimale Position der Pfannenplatte (15) an der Adapterplatte (16) fein anzupassen. Dabei sind die bevorzugt mindestens zwei länglichen Öffnungen (17) insbesondere in zu einander parallelen Richtungen angeordnet.

In einer anderen bevorzugten Ausführungsform weist die Gelenkpfanne (5) der Schuhplatte (2) und/oder die Gelenkpfanne (5) der Pfannenplatte (15) eine Aussparung (18) auf, wobei, wenn die Gelenkpfanne (5) über dem Gelenkkopf (3) angeordnet ist, die Aussparung (18) bevorzugt über der Achse (4) des Pedals (1) liegt. Dies ermöglicht eine tiefere Gelenkpfanne (5), wodurch die Gelenkpfanne (5) einen grösseren Bereich des Gelenkkopfs (3) umschliessen kann, ohne dass beim Treten die Bewegungsfreiheit des Fusses eingeschränkt wird.

### Verfahren zur Herstellung des Pedals (1)

Das erfindungsgemässe Fahrrad Pedal (1) wird durch Verbinden des Gelenkkopfs (3) mit der Achse (4) hergestellt.

In einer bevorzugten Ausführungsform des erfindungsgemässen Verfahrens wird der Gelenkkopf (3) so mit der Achse (4) verbunden, sodass die Verlängerung der Rotationsachse (6) der Achse (4) im Wesentlichen durch den Mittelpunkt des Gelenkkopfs (3), und somit gegebenenfalls durch den Mittelpunkt des Kugelmagneten (7), führt.

In einer bevorzugten Ausführungsform des erfindungsgemässen Verfahrens zur Herstellung des erfindungsgemässen Fahrrad Pedals (1) wird zudem der Gelenkkopf (3) mit der Achse (4) bevorzugt mit einem Fixiermittel (11) verbunden, wobei das Fixiermittel (11) eine Schraube, Schweissnaht, Lötnaht, Klebeschicht, Klemme, Niete, Steckverbindung, Mutter, Zapfen, Stift und/oder einen Bolzen sein kann. Dadurch wird der Gelenkkopf (3) typischerweise fest mit der Achse (4) verbunden, wodurch der Gelenkkopf (3) beim Treten und somit beim Bewegen des Pedals (1), ebenfalls rotiert. Aufgrund der erfindungsgemässen Ausführung des Fahrrad Pedals (1) und der Schuhplatte (2) tritt trotz der Rotation des Gelenkkopfs (3) in der Gelenkpfanne (5), welche sich im Wesentlichen nicht bewegt, kaum Reibung auf.

In einer anderen bevorzugten Ausführungsform des erfindungsgemässen Verfahrens zur Herstellung des erfindungsgemässen Fahrrad Pedals (1) wird der Kugelmagnet (7) mit der Pedalpfanne (8) und der Abdeckkappe (9) umschlossen sowie die Pedalpfanne (8) und die Abdeckkappe (9) miteinander verbunden, wodurch der Kugelmagnet (7), die Pedalpfanne (8) und die Abdeckkappe (9) somit den Gelenkkopf (3) bilden. Dabei kann der Kugelmagnet (7) an der Pedalpfanne (8) und/oder der Abdeckkappe (9) beispielsweise mittels magnetischer Anziehungskraft, Fixiermitteln, Kleben, Schweissen und/oder Löten befestigt werden. Es ist aber auch möglich, dass der Gelenkkopf (3) einfach in die Pedalpfanne (8) und/oder die Abdeckkappe (9) hineingelegt wird, wobei gegebenenfalls der Gelenkkopf (3) aufgrund einer Magnetanziehung beispielsweise mit der Achse (4), einem Fixiermittel (11) und/oder der Axialbefestigung (12) fixiert wird. Anschliessend wird die Pedalpfanne (8) und die Abdeckkappe (9), bevorzugt mittels Fixiermittel (11), insbesondere mittels einer Schraube, Schweissnaht, Lötnaht, Klebeschicht, Klemme, Niete, Steckverbindung, Mutter, Zapfen, Stift und/oder einem Bolzen miteinander verbunden. Dabei wird die Gehäusehülse (10), welche mit mindestens einem Teil des Gelenkkopfs (3) verbunden ist, vorher, während und/oder nachher über die Achse (4) geschoben und das Stabilisierungselement (10a) der Gehäusehülse (10) zwischen der Achse (4) und der Axialbefestigung (12) stabilisiert indem die Axialbefestigung (12) an der Achse (4) fixiert wird. Dabei kann Achse (4) gegebenenfalls ein Fixiermittel (11) wie eine Schraube, Niete und/oder einen Bolzen umfassen. Zwischen der Gehäusehülse (10) und der Achse (4) werden zudem gegebenenfalls mindestens eine Dichtung (13) und/oder mindestens ein Lager (14) angeordnet.

### Verfahren zur Herstellung der Schuhplatte (2)

Die erfindungsgemässe Schuhplatte (2), umfassend die Gelenkpfanne (5), kann auf verschiedene Arten hergestellt werden. Dabei ist die Gelenkpfanne (5) Teil der - bevorzugt einteiligen - Schuhplatte (2), oder Teil der Pfannenplatte (15), wobei die Pfannenplatte (15) und die Adapterplatte (16) - zusammen mit den benötigten Fixiermitteln und gegebenenfalls dazugehörigen Muttern - im Wesentlichen eine zwei- oder mehrteilige Schuhplatte (2) bilden.

In einer bevorzugten Ausführungsform des erfindungsgemässen Verfahrens zur Herstellung der erfindungsgemässen Schuhplatte (2) des Kugelgelenks wird die Gelenkpfanne (5) der Schuhplatte (2) so ausgebildet, dass der Gelenkkopf (3) des Pedals (1) und die Gelenkpfanne (5) sich im Wesentlichen formpassend, formschlüssig und/oder kraftschlüssig verbinden.

In einer anderen bevorzugten Ausführungsform des erfindungsgemässen Verfahrens zur Herstellung der erfindungsgemässen Schuhplatte (2) des Kugelgelenks wird die Gelenkpfanne (5) der Schuhplatte (2) so ausgebildet, dass der Wölbungsradius der Gelenkpfanne (5) grösser, bevorzugt mindestens 5% grösser, insbesondere mindestens 20% grösser, ist als der Radius des Gelenkkopfs (3), wobei der Gelenkkopf (3) und/oder die Gelenkpfanne (5) aus magnetischem oder magnetisiertem Material und der andere Teil des Kugelgelenks aus magnetisierbarem Material besteht. Diese Ausführungsform erlaubt eine etwas grössere Bewegungsfreiheit der Schuhplatte (2) - und somit auch des Fusses.

In einer weiteren bevorzugten Ausführungsform des erfindungsgemässen Verfahrens zur Herstellung der erfindungsgemässen Schuhplatte (2) des Kugelgelenks wird die Gelenkpfanne (5) der Schuhplatte (2) so ausgebildet, dass die Gelenkpfanne (5) im Wesentlichen eine flache Platte bildet, wobei der Gelenkkopf (3) und/oder die Gelenkpfanne (5) aus magnetischem oder magnetisiertem Material und der andere Teil des Kugelgelenks aus magnetisierbarem Material besteht. Diese Ausführungsform erlaubt eine noch grössere Bewegungsfreiheit der Schuhplatte (2) - und somit auch des Fusses.

Im Folgenden wird eine nicht-limitierende, bevorzugte Ausführungsform des erfindungsgemässen Fahrrad Pedals (1) und der erfindungsgemässen Schuhplatte (2), welche zusammen als Kugelgelenk ausgebildet sind, anhand der nachfolgenden Zeichnungen beschrieben. Diese sind nicht einschränkend auszulegen und werden als Bestandteil der Beschreibung verstanden:

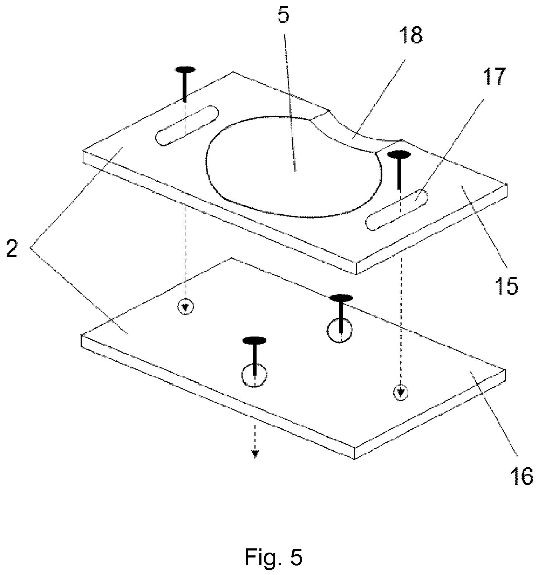

- Fig. 1: zeigt beispielhaft einen schematischen Querschnitt einer bevorzugten Ausführungsform des Fahrrad Pedals (1), welche im Wesentlichen den Gelenkkopf (3) und die Achse (4) umfasst, wobei der Gelenkkopf (3) im Wesentlichen der Kugelmagnet (7) ist. Der Kugelmagnet (7), d.h. der Gelenkkopf (3), ist in dieser Ausführungsform direkt mit einem Fixiermittel (11) mit der Achse (4) verbunden. Die äussere Form des Fixiermittels (11) ist abgerundet dargestellt, wodurch sie eine Ausstülpung (9a) bildet. Wird nun der Schuh mit der Gelenkpfanne (5) (in Fig. 5 dargestellt) stark nach aussen gedreht, kann er aufgrund der Ausstülpung (9a) einfach vom Gelenkkopf (3) entfernt werden,
- Fig. 2: zeigt beispielhaft einen schematischen Querschnitt einer bevorzugten Ausführungsform des Fahrrad Pedals (1), welche im Wesentlichen den Gelenkkopf (3) mit Gehäusehülse (10) und die Achse (4) umfasst. Der Gelenkkopf (3) umfasst in dieser Darstellung einen Kugelmagneten (7), welcher in die Pedalpfanne (8) eingeführt ist, die Pedalpfanne (8) und die Abdeckkappe (9). Der Gelenkkopf (3) wird bevorzugt so mit der Achse (4) verbunden, dass die Verlängerung der Rotationsachse (6) der Achse (4) im Wesentlichen durch den Mittelpunkt des Gelenkkopfs (3) und somit gegebenenfalls durch den Mittelpunkt des Kugelmagneten (7) führt. Die Abdeckkappe (9) mit der Ausstülpung (9a) kann in Pfeilrichtung über die noch offene Fläche des Kugelmagneten (7) geführt und beispielsweise an der Pedalpfanne (8) und/oder am Kugelmagneten (7) befestigt werden. Der Kugelmagnet (7) kann lose, d.h. ohne jegliche Fixierung, innerhalb der Umhüllung durch die Pedalpfanne (8) und Abdeckklappe (9) liegen. Es ist aber auch möglich, dass der Kugelmagnet (7) beispielsweise durch magnetische Anziehung, Schrauben, Kleben, Löten und/oder Schweissen an der Pedalpfanne (8), Abdeckklappe (9), Achse (4), Gehäusehülse (10), am Fixiermittel (11) und/oder der Axialbefestigung (12) fixiert wird.
Die Pedalpfanne (8) ist beispielhaft mit der Gehäusehülse (10) verbunden, welche die Achse (4) umschliesst. Die Achse (4) umfasst in dieser Darstellung ein Fixiermittel (11), wobei die Axialbefestigung (12) - hier in Form einer Mutter - am Fixiermittel (11) und somit an der Achse (4) fixiert ist. Die Gehäusehülse (10) umfasst ein Stabilisierungselement (10a). Das Stabilisierungselement (10a) der Gehäusehülse (10) ist an der Achse (4) mit der Axialbefestigung (12) stabilisiert. Durch diese Anordnung kann sich die Gehäusehülse (10) rotatorisch um die Achse (4) drehen, nicht aber translatorisch von der Achse entfernen. Die Achse (4) kann zudem an der Seite, die dem Gelenkkopf (3) gegenüberliegt, eine Befestigungsvorrichtung - beispielsweise ein Gewinde - aufweisen, um die Achse (4) - und somit das Pedal (1) - an der Kurbel des Fahrrads (nicht gezeigt) beispielsweise mittels In buss- und/oder Schraubenschlüssel zu befestigen.
Zwischen der Achse (4) und der Gehäusehülse (10) sind bevorzugt verschiedene Dichtungen (13) und/oder Lager (14) angeordnet, um eine möglichst reibungsfreie Drehung zwischen der Achse (4) und der Gehäusehülse (10) zu ermöglichen (in dieser Darstellung ist nur je eine Dichtung (13) und ein Lager (14) dargestellt). Wird die erfindungsgemässe Schuhplatte (2) von oben über den Gelenkkopf (3) gelegt, kann die Schuhplatte (2) - und somit der Fuss mit dem Fahrradschuh - zum Entfernen der Schuhplatte (2) beispielsweise einfach nach aussen, d.h. von der Achse (4) weg und hin zur Ausstülpung (9a), gedreht werden, wodurch sich die Gelenkpfanne (5) etwas über die Ausstülpung (9a) schiebt. Dadurch kann die Gelenkpfanne (5) (in Fig. 5 dargestellt) einfach vom Gelenkkopf (3) entfernt werden, was insbesondere der Fall ist, wenn der Gelenkkopf (3) und/oder die Gelenkpfanne (5) magnetisches oder magnetisiertes Material umfassen.

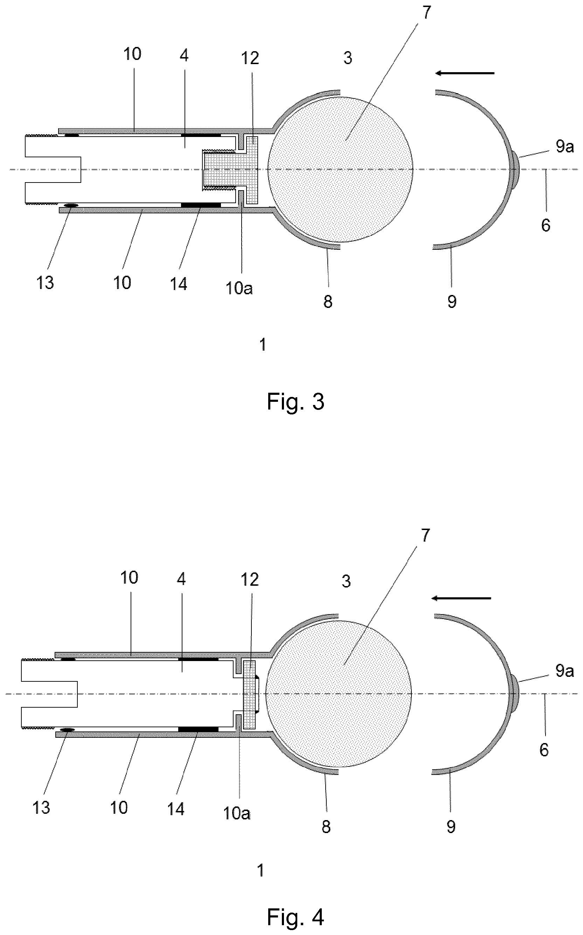

- Fig. 3: zeigt analog zu Fig. 2 beispielhaft einen schematischen Querschnitt einer bevorzugten Ausführungsform des Fahrrad Pedals (1). Dabei ist die Axialbefestigung (12) direkt, d.h. ohne Fixiermittel (11), an der Achse (4) fixiert. Die Axialbefestigung (12) weist in dieser Darstellung ein Aussengewinde auf, welches mittels Schrauben in das Innengewinde der Achse (4) geschraubt ist. Das Stabilisierungselement (10a) der Gehäusehülse (10), welches zwischen der Achse (4) und der Axialbefestigung (12) angeordnet ist, wird durch diese Anordnung stabilisiert, wodurch sich die Gehäusehülse (10) rotatorisch um die Achse (4) drehen, nicht aber translatorisch von der Achse entfernen kann.
- Fig. 4: zeigt analog zu Fig. 2 und Fig. 3 beispielhaft einen schematischen Querschnitt einer bevorzugten Ausführungsform des Fahrrad Pedals (1). Dabei ist die Axialbefestigung (12) direkt, d.h. ohne Fixiermittel (11), mittels Löten, Schweissen und/oder Kleben an der Achse (4) fixiert. Das Stabilisierungselement (10a) der Gehäusehülse (10), welches zwischen der Achse (4) und der Axialbefestigung (12) angeordnet ist, wird durch diese Anordnung stabilisiert, wodurch sich die Gehäusehülse (10) rotatorisch um die Achse (4) drehen, nicht aber translatorisch von der Achse entfernen kann.
- Fig. 5: zeigt beispielhaft einen schematischen Querschnitt einer bevorzugten Ausführungsform der erfindungsgemässen Schuhplatte (2), wobei die Schuhplatte (2) in dieser Darstellung eine Pfannenplatte (15) und eine Adapterplatte (16) umfassen. Die dargestellte Pfannenplatte (15) umfasst die Gelenkpfanne (5), um mit dem Fahrrad Pedal (1) (in Fig. 2 dargestellt) ein Kugelgelenk zu bilden. Die Adapterplatte (16) kann beispielsweise mittels einem oder mehreren Fixiermitteln an der Fahrrad Schuhsohle befestigt werden. Die Pfannenplatte (15) kann typischerweise nach der Befestigung der Adapterplatte (16) an der Schuhsohle mit der Adapterplatte (16) verbunden - beispielsweise verschraubt - werden. Die dargestellte Pfannenplatte (15) umfasst zwei zueinander parallel angeordnete längliche Öffnungen (17), durch welche die Pfannenplatte (15) beispielsweise mit Fixiermitteln an der Adapterplatte (16) befestigt werden kann. Aufgrund der Geometrie der länglichen Öffnungen (17) kann die Pfannenplatte (15) in verschiedenen Positionen an der Adapterplatte (16) befestigt werden. Ist die Schuhplatte (2) einteilig, kann diese selber eine oder mehrere solche längliche Öffnungen (17) aufweisen. Dadurch kann die optimale Position der Schuhplatte (2) an der Schuhsohle und/oder die optimale Position der Pfannenplatte (15) an der Adapterplatte (16) fein angepasst werden.

Bei der dargestellten, erfindungsgemässen Schuhplatte (2) umfasst die Pfannenplatte (15) eine Aussparung (18). Wird nun die Schuhplatte (2) mit der Aussparung (18) über den Gelenkkopf (3) des Pedals (1) gelegt, wird die Schuhplatte (2) bevorzugt so angeordnet, dass die Aussparung (18) über der Achse (4) und - sofern vorhanden - der Gehäusehülse (10) zu liegen kommt. Dies erlaubt eine grössere Bewegungsfreiheit der Schuhplatte (2) und somit des Fusses mit dem Fahrradschuh.

Die Gelenkpfanne (5) der Schuhplatte (2) und/oder der Pfannenplatte (15) umfasst in einer bevorzugten Ausführungsform magnetisches, magnetisiertes und/oder magnetisierbares Material. Umfasst der Gelenkkopf (3) einen Kugelmagneten (7) - und somit magnetisches und/oder magnetisiertes Material - umfasst die Gelenkpfanne (5) bevorzugt magnetisches, magnetisiertes und/oder magnetisierbares Material, um eine magnetische Anziehung der Gelenkpfanne (5) durch den Gelenkkopf (3) zu ermöglichen.

Die Gelenkpfanne (5) der Schuhplatte (2) resp. der Pfannenplatte (15) kann zusätzlich - oder anstelle von magnetischem, magnetisiertem und/oder magnetisierbarem - Material beispielsweise auch eine mechanische Anordnung zum Ein- und Ausklicken des Gelenkkopfs (3) in die Gelenkpfanne (5) des Kugelgelenks umfassen, beispielsweise eine Schnappverbindungen, insbesondere
eine Schnappkugelgelenk-Verbindung und/oder eine Passfeder-Verbindung (nicht gezeigt).

## Patentansprüche

1. Fahrrad Pedal (1) mit Schuhplatte (2), wobei das Pedal (1) und die Schuhplatte (2) als Kugelgelenk ausgebildet sind, wobei im Wesentlichen das Pedal (1) einen Gelenkkopf (3) mit Achse (4) und die Schuhplatte (2) eine Gelenkpfanne (5) umfasst, **dadurch gekennzeichnet, dass**
a) mindestens 25 Flächen-% der Oberfläche des Gelenkkopfs (3) oder mindestens 50 Flächen-% der Gelenkpfanne (5) aus im Wesentlichen einstückigem magnetischem oder magnetisiertem Material und der andere Teil des Kugelgelenks aus magnetisierbarem Material besteht, oder
b) mindestens 25 Flächen-% der Oberfläche des Gelenkkopfs (3) oder mindestens 50 Flächen-% der Gelenkpfanne (5) aus im Wesentlichen einstückigem magnetischem oder magnetisiertem Material und der andere Teil des Kugelgelenks aus magnetisierbarem Material besteht, wobei mindestens ein Teil mindestens einer der Oberflächen mit einem nicht-magnetischen und/oder nicht-magnetisierbaren Material bedeckt ist, oder
c) mindestens 25 Flächen-% der Oberfläche des Gelenkkopfs (3) und mindestens 50 Flächen-% der Gelenkpfanne (5) aus im Wesentlichen einstückigem magnetischem oder magnetisiertem Material besteht, und/oder
d) mindestens 25 Flächen-% der Oberfläche des Gelenkkopfs (3) und mindestens 50 Flächen-% der Gelenkpfanne (5) aus im Wesentlichen einstückigem magnetischem oder magnetisiertem Material besteht, wobei mindestens eine der Oberflächen mit einem nicht-magnetischen und/oder nicht-magnetisierbaren Material bedeckt ist.

2. Pedal (1) mit Schuhplatte (2) nach Anspruch 1, **dadurch gekennzeichnet, dass**
- der Gelenkkopf (3) und die Gelenkpfanne (5) sich im Wesentlichen formpassend, formschlüssig und/oder kraftschlüssig verbinden, oder
- der Wölbungsradius der Gelenkpfanne (5) grösser ist als der Radius des Gelenkkopfs (3), wobei der Gelenkkopf (3) und/oder die Gelenkpfanne (5) magnetisches oder magnetisiertes Material und der andere Teil des Kugelgelenks magnetisierbares Material umfassen, oder
- die Gelenkpfanne (5) als im Wesentlichen flache Platte ausgebildet ist, wobei der Gelenkkopf (3) und/oder die Gelenkpfanne (5) magnetisches oder magnetisiertes Material und der andere Teil des Kugelgelenks magnetisierbares Material umfassen.

3. Pedal (1) mit Schuhplatte (2) nach Anspruch 1 oder 2, **dadurch gekennzeichnet, dass** der Gelenkkopf (3) des Pedals (1) einen Kugelmagneten (7) umfasst, wobei der Kugelmagnet (7) eine Haftkraft von 2 bis 50 kg aufweist.

4. Pedal (1) mit Schuhplatte (2) nach mindestens einem der Ansprüche 1 bis 3, **dadurch gekennzeichnet, dass** der Gelenkkopf (3) eine Pedalpfanne (8) und eine Abdeckkappe (9) umfasst, wobei der Gelenkkopf (3) einen Kugelmagneten (7) umfasst, welcher von der Pedalpfanne (8) und der Abdeckkappe (9) umgeben ist.

5. Pedal (1) mit Schuhplatte (2) nach Anspruch 4, **dadurch gekennzeichnet, dass** der Gelenkkopf (3) und/oder die Abdeckkappe (9) im Bereich der Verlängerung der Rotationsachse (6) der Achse (4) eine Ausstülpung (9a) aufweist.

6. Pedal (1) mit Schuhplatte (2) nach mindestens einem der Ansprüche 1 bis 5, **dadurch gekennzeichnet, dass**
- der Gelenkkopf (3) direkt mit einem Fixiermittel (11) mit der Achse (4) verbunden ist, wobei das Fixiermittel (11) eine Schraube, Schweissnaht, Lötnaht, Klebeschicht, Klemme, Niete, Steckverbindung, Mutter, Zapfen, Stift und/oder einen Bolzen sein kann, oder
- der Gelenkkopf (3) an einer Gehäusehülse (10) befestigt ist, wobei die Gehäusehülse (10) ein Stabilisierungselement (10a) umfasst und die Gehäusehülse (10) über die Achse (4) greift, das Stabilisierungselement (10a) der Gehäusehülse (10) an der Achse (4) mit einer Axialbefestigung (12) stabilisiert ist, wobei die Axialbefestigung (12) an der Achse (4) fixiert ist, wobei zwischen der Gehäusehülse (10) und der Achse (4) und/oder Axialbefestigung (12) mindestens eine Dichtung (13) und/oder mindestens ein Lager (14) angeordnet sind.

7. Pedal (1) mit Schuhplatte (2) nach mindestens einem der Ansprüche 1 bis 6, **dadurch gekennzeichnet, dass** die Schuhplatte (2) an einer Schuhsohle mit geeigneter Befestigungsvorrichtung befestigbar ist.

8. Pedal (1) mit Schuhplatte (2) nach mindestens einem der Ansprüche 1 bis 7, **dadurch gekennzeichnet, dass** die Schuhplatte (2) eine Pfannenplatte (15) und eine Adapterplatte (16) umfasst, wobei die Pfannenplatte (15) und die Adapterplatte (16) miteinander verbunden sind, die Pfannenplatte (15) die Gelenkpfanne (5) umfasst und die Adapterplatte (16) an der Schuhsohle befestigt werden kann.

9. Pedal (1) mit Schuhplatte (2) nach Anspruch 8, **dadurch gekennzeichnet, dass** die Schuhplatte (2) und/oder die Pfannenplatte (15) mindestens eine für eine Schraubverbindung geeignete, längliche Öffnung (17) aufweist um die optimale Position der Schuhplatte (2) an der Schuhsohle und/oder die optimale Position der Pfannenplatte (15) an der Adapterplatte (16) fein anzupassen.

10. Pedal (1) mit Schuhplatte (2) nach Anspruch 8 oder 9, **dadurch gekennzeichnet, dass** die Gelenkpfanne (5) der Schuhplatte (2) und/oder der Pfannenplatte (15) eine Aussparung (18) aufweist, wobei, wenn die Gelenkpfanne (5) über dem Gelenkkopf (3) angeordnet ist, die Aussparung (18) über der Achse (4) dem Pedal (1) liegen kann.

11. Pedal (1) mit Schuhplatte (2) nach mindestens einem der Ansprüche 1 bis 10, **dadurch gekennzeichnet, dass** die mechanische Anordnung zum Ein- und Ausklicken des Gelenkkopfs (3) in die Gelenkpfanne (5) des Kugelgelenks eine Schnappverbindungen umfasst.

12. Verfahren zur Herstellung des Fahrrad Pedals (1) des Kugelgelenks nach mindestens einem der Ansprüche 6 bis 11, **dadurch gekennzeichnet, dass** der Gelenkkopf (3) so mit der Achse (4) verbunden wird, dass die Verlängerung der Rotationsachse (6) der Achse (4) im Wesentlichen durch den Mittelpunkt des Gelenkkopfs (3) führt, wobei
i) der Gelenkkopf (3) mit der Achse (4) mit einem Fixiermittel (11) verbunden wird, wobei das Fixiermittel (11) eine Schraube, Schweissnaht, Lötnaht, Klebeschicht, Klemme, Niete, Steckverbindung, Mutter, Zapfen, Stift und/oder einen Bolzen sein kann, oder
ii) der Kugelmagnet (7) mit der Pedalpfanne (8) und der Abdeckkappe (9) umschlossen wird, die Pedalpfanne (8) und die Abdeckkappe (9) miteinander verbunden werden und der Kugelmagnet (7), die Pedalpfanne (8) und die Abdeckkappe (9) somit den Gelenkkopf (3) bilden, wobei vorher, während und/oder nachher die Gehäusehülse (10), welche mit mindestens einem Teil des Gelenkkopfs (3) verbunden ist, über die Achse (4) geschoben wird, das Stabilisierungselement (10a) der Gehäusehülse (10) an der Achse (4) mit einer Axialbefestigung (12) stabilisiert und die Axialbefestigung (12) an der Achse (4) mittels Fixiermittel (11) fixiert wird, wobei die Achse (4) und/oder Axialbefestigung (12) ein Fixiermittel (11) umfassen kann, und zwischen der Gehäusehülse (10) und der Achse (4) und/oder Axialbefestigung (12) mindestens eine Dichtung (13) und/oder mindestens ein Lager (14) angeordnet wird.

13. Verfahren zur Herstellung der Schuhplatte (2) des Kugelgelenks nach mindestens einem der Ansprüche 1 bis 11, **dadurch gekennzeichnet, dass** die Gelenkpfanne (5) der Schuhplatte (2) so ausgebildet wird, dass
- der Gelenkkopf (3) des Pedals (1) und die Gelenkpfanne (5) sich im Wesentlichen formpassend, formschlüssig und/oder kraftschlüssig verbinden, oder
- der Wölbungsradius der Gelenkpfanne (5) grösser ist als der Radius des Gelenkkopfs (3), wobei der Gelenkkopf (3) und/oder die Gelenkpfanne (5) aus magnetischem oder magnetisiertem Material und der andere Teil des Kugelgelenks aus magnetisierbarem Material besteht, oder
- die Gelenkpfanne (5) als im Wesentlichen eine flache Platte bildet, wobei der Gelenkkopf (3) und/oder die Gelenkpfanne (5) magnetisches oder magnetisiertes Material und der andere Teil des Kugelgelenks magnetisierbares Material umfasst.

14. Verwendung des Pedals (1) und der Schuhplatte (2) nach mindestens einem der Ansprüche 1 bis 11 und des nach Anspruch 12 hergestellten Pedals (1) und der nach Anspruch 13 hergestellten Schuhplatte (2) als Pedal und Schuhplatte für mit mindestens einer Kurbel angetriebenen Geräte wie Zweiräder, Fahrräder, Rennfahrräder, Mountainbikes, City-Bikes, Tourenfahrräder, Rischkas, Lastenfahrräder, motorisierte Fahrräder, Elektro-Bikes, Spinning Geräte, Ergometer und/oder Heimtrainer Fahrräder.
